# EUROPÄISCHE PATENTSCHRIFT

(11) **EP 1 801 042 B1**
(45) Veröffentlichungstag und Bekanntmachung des Hinweises auf die Patenterteilung: **25.06.2008**
(21) Anmeldenummer: 06023196.6
(22) Anmeldetag: 08.11.2006
(51) Int. Cl.: B65G 15/02, B65G 15/46, B65G 15/56, B29D 29/06

(54) **Förderband**
Conveyor belt
Bande transporteuse

(30) Priorität: 23.12.2005 DE 202005020128 U
(43) Veröffentlichungstag der Anmeldung: 27.06.2007
(73) Patentinhaber: TRANSNORM SYSTEM GmbH, 31177 Harsum (DE)
(72) Erfinder: Walter, Detlef, 30855 Langenhagen (DE)
(74) Vertreter: Siekmann, Gunnar

(56) Entgegenhaltungen:
- EP-A- 1 129 966
- EP-B1- 1 299 295
- GB-A- 1 042 287
- JP-A- 2004 262 565
- US-A- 550 517
- US-A- 4 667 812
- US-A- 4 955 466

## Beschreibung

Die Erfindung betrifft ein Förderband mit mindestens einer an einer Kante, insbesondere einer Längsseite, des Förderbandes angeordneten Gurtkante, wobei die Gurtkante Bereiche verschiedener Härte aufweist.

Ein gattungsgemäßes Förderband ist beispielsweise aus der EP 1 299 295 B1 bekannt. Dort ist ein Förderband mit einer Gurtkante beschrieben, wobei die Gurtkante in einem äußeren Teilabschnitt aus einem härteren Material hergestellt ist, da dort ein Kontakt zu den Führungsrollen erfolgt. Ein anderes Förderband mit einer Gurtkante ist beispielsweise aus der Druckschrift US 4,955,466 bekannt. Die in diesen Druckschriften gezeigten Gurtkanten zeigen auch zwei unterschiedliche Typen von Gurtkanten, bei denen die Wulst, an der die Führungsrollen anliegen, einmal im Außenbereich und einmal im Innenbereich der Gurtkante angeordnet ist. Die vorliegende Erfindung betrifft beide dieser Typen von Gurtkante.

Der Erfindung liegt die Aufgabe zugrunde, ein Förderband der eingangs genannten Art zu schaffen, das besonders stabil und langlebig ausgebildet ist.

Die Lösung dieser Aufgabe erfolgt mit einem Förderband mit den Merkmalen des Patentanspruchs 1. Vorteilhafte Weiterbildungen der Erfindung sind in den Unteransprüchen beschrieben.

Bei einem Förderband mit mindestens einer an einer Kante, insbesondere einer Längsseite, des Förderbandes angeordneten Gurtkante, wobei die Gurtkante Bereiche mit Materialien verschiedener Härten aufweist, ist es erfindungswesentlich, daß ein unmittelbar am Förderband anliegender, parallel zum Förderband ausgerichteter Bereich eine größere Härte aufweist als ein sich an diesen Bereich nach außen anschließender Bereich. Dadurch wird insbesondere der Verschleiß der Gurtkante verringert. Das regelmäßig sehr steife Material des Förderbandes selbst kann sich innerhalb der Gurtkante durch Querverwindungen in gewissem Umfang bewegen und führt dabei zu einer Beanspruchung und zu einem Verschleiß der Gurtkante von innen heraus. Durch die Ausbildung eines inneren Bereichs, der das Förderband unmittelbar kontaktiert, aus einem härteren Material als der sich daran anschließende Bereich, werden derartige Verschleißerscheinungen minimiert.

Das erfindungsgemäße Förderband eignet sich insbesondere zum Einsatz in Kurvengurtförderern.

Bevorzugt umschließt der Bereich größerer Härte das Förderband innerhalb der Gurtkante vollständig. Das Förderband ist natürlich durchgängig ausgebildet, so daß der vollständige Umschluß auf Oberseite und Unterseite des Förderbandes und auch auf die in der Gurtkante angeordnete äußere Seitenkante des Förderbandes bezogen ist.

In einer bevorzugten Ausführungsform der Erfindung ist die Gurtkante aus zwei verschiedenen Teilen zusammengesetzt, nämlich einmal einer inneren Schicht und einer diese umgreifenden äußeren Schicht. Dabei ist die innere Schicht aus einem härteren Material und die äußere Schicht aus einem weicheren Material gefertigt. Beide Materialien sind dabei vorzugsweise aus Polyurethan gefertigt. Jedoch sind auch andere Materialien möglich. In einer besonders bevorzugten Ausgestaltung der Erfindung sind der innere Bereich und der äußere Bereich durch Koextrudieren hergestellt. Dadurch läßt sich die Gurtkante besonders einfach und schnell herstellen.

In einer bevorzugten Ausgestaltung der Erfindung sind in der Gurtkante zusätzlich Fäden eines reißfesten Materials angeordnet. Bevorzugt sind nicht nur einzelne Fäden, sondern ein Gewebe aus einem reißfesten Material in der Gurtkante vorgesehen. Die Fäden bzw. das Gewebe des reißfesten Materials sind günstigerweise in einer sich parallel zum Förderband erstreckenden Ebene angeordnet. Bevorzugt sind die Fäden bzw. das Gewebe in einer Ebene zwischen dem innenliegenden Bereich größerer Härte und dem außenliegenden Bereich geringerer Härte angeordnet. Bevorzugt ist auf jeder Seite des Förderbandes in einer sich parallel zum Förderband erstreckenden Ebene eine Lage des reißfesten Gewebes bzw. Fäden aus dem reißfesten Material angeordnet. Alternativ kann auch eine durchgehende Einlage eines solchen Gewebes, das sich also um die äußere Förderbandkante in der Gurtkante herumzieht, angeordnet sein.

Die Gurtkante bildet einen Wulst aus und weist weiterhin bevorzugt das Förderband umschließende Arme auf. In einer bevorzugten Ausgestaltung ist der Wulst der Gurtkante im Außenbereich angeordnet und die das Förderband umschließenden Arme erstrecken sich nach innen in das Förderband hinein. In einer anderen bevorzugten Ausgestaltung ist der Wulst am Ende dieser Arme, also im Bereich des Förderbandes selbst angeordnet, so daß sich die Arme vom Wulst aus nach außen erstrecken.

Ein weiterer Aspekt der Erfindung besteht in der Bereitstellung der erfindungsgemäßen Gurtkante als Ersatzteil oder Umrüstungsteil für bestehende Förderbänder. Die Gurtkante zeichnet sich dadurch aus, daß ein innerer Bereich eine größere Härte aufweist als ein sich an diesen Bereich außen anschließender Bereich. Dieser innere Bereich ist zur unmittelbaren Anlage am Förderband vorgesehen und parallel zum in der Gurtkante aufzunehmenden Förderband ausgerichtet. Hinsichtlich der weiteren möglichen Ausgestaltungen dieser Gurtkante wird auf die obige Beschreibung verwiesen.

Nachfolgend wird die Erfindung anhand eines in der Zeichnung dargestellten bevorzugten Ausführungsbeispiels weiter erläutert. Im einzelnen zeigen die schematischen Darstellungen in:
- Fig. 1:: eine perspektivische Teilansicht einer Gurtkante eines erfindungsgemäßen Förderbandes mit unterschiedlich weit herausgezogenen bzw. geschnittenen Bereichen;
- Fig. 2:: einen Teilabschnitt einer Gurtkante mit "durchsichtigem" äußerem Bereich;
- Fig. 3: und 2;: eine Querschnittsansicht der Gurtkante gemäß der Fig. 1
- Fig. 4:: eine Querschnittsansicht einer Gurtkante mit Förderband einer zweiten Ausführungsform der Erfindung;
- Fig. 5:: eine perspektivische Ansicht eines Teilbereichs der Gurtkante gemäß Fig. 4;
- Fig. 6:: eine geschnittene Ansicht eines Förderbandes mit zwei Gurtkanten einer dritten Ausführungsform der Erfindung;
- Fig. 7:: eine perspektivische Ansicht eines Abschnitts einer Gurtkante gemäß Fig. 6.

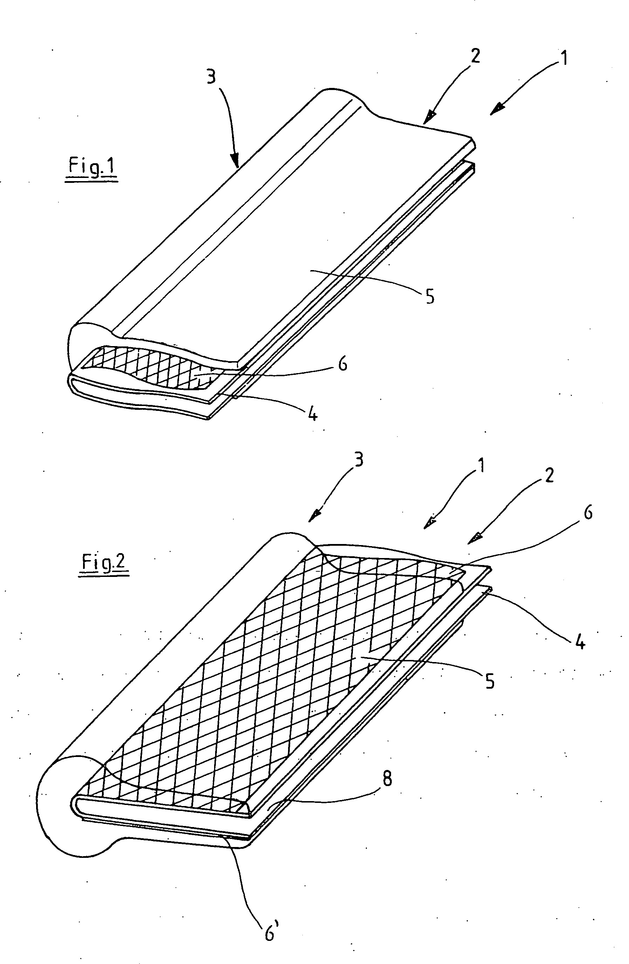

In Fig. 1 ist eine Gurtkante 1 eines Förderbandes in perspektivischer Ansicht dargestellt. Die Gurtkante 1 weist dabei einen aus zwei parallelen Armen 2 bestehenden Bereich auf, der innenseitig eine Aufnahmetasche ausbildet, in die das Förderband eingeschoben wird. Das Förderband kann dann mit der Gurtkante 1, insbesondere mit den Armen 2 verbunden, insbesondere vernäht oder verklebt werden. Im äußeren Bereich ist hier eine wulstartige Erhebung 3 vorgesehen, die zur Anlage an Förderrollen dient. Der innere Bereich 4, der hier doppellagig ausgebildet ist, dient zur Aufnahme des Förderbandes. Dieser innere Bereich 4 ist mit größerer Härte als der äußere Bereich 5 ausgebildet. Dazu können unterschiedliche Polyurethanmischungen verwendet werden. Bevorzugt werden die Bereiche durch Koextrudieren hergestellt. Zwischen diesen Bereichen eingelegt ist hier ein Gewebe zur Erhöhung der Reißfestigkeit. Dieses Gewebe ist vorzugsweise aus einer Kunststoffaser ausgebildet. Die Einlage 6 ist dabei bevorzugt mit einem kleinen Abstand zum offenen Rand hin angeordnet. Dadurch kann die Einlage nicht als Hindernis wirken, an dem sich zu transportierende Gegenstände verfangen können. Im Innenbereich ist das Gewebe 6 parallel zum Förderband ausgerichtet, wobei zwei getrennte parallele Lagen des Gewebes 6 vorgesehen sind. Alternativ kann auch ein einziges Gewebeelement vorgesehen sein, das umlaufend um das Förderband entsprechend der Ausgestaltung des inneren Bereichs ausgebildet ist.

In Fig. 2 ist der Abschnitt der Gurtkante 1 mit den Armen 2 und dem Wulst 3 dargestellt, wobei der äußere Bereich 5 in dieser Darstellung durchsichtig dargestellt ist, so daß das Gewebe 6 vollständig sichtbar ist. Im unteren Bereich erkennt man hier die zweite Gewebelage 6' unterhalb der Nut 8 zur Aufnahme des Förderbandes. Das Gewebe 6 ist oberhalb des Förderbandes und die Gewebeschicht 6' ist unterhalb des Förderbandes angeordnet.

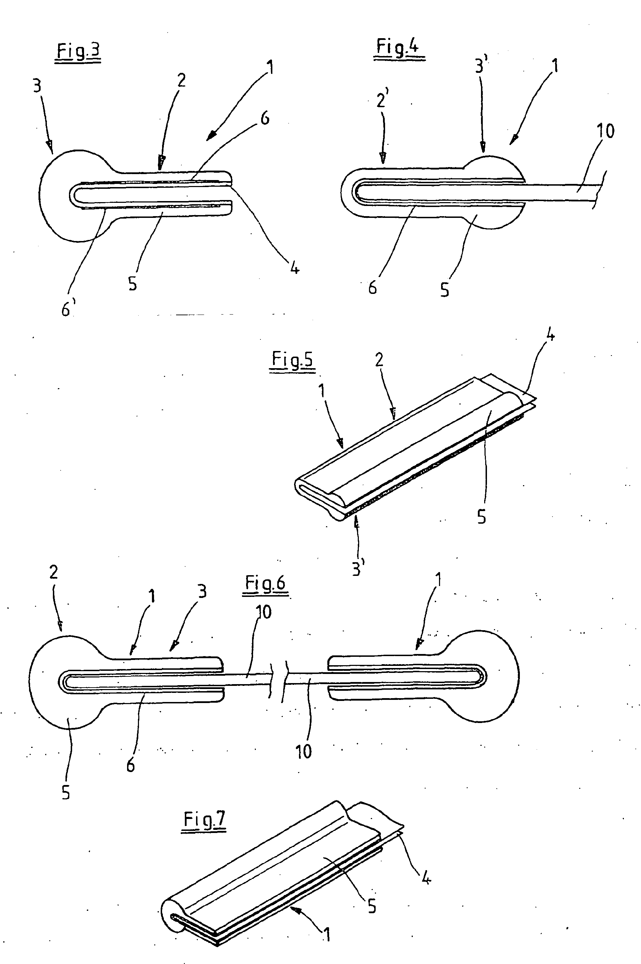

In Fig. 3 ist ein Querschnitt durch die Gurtkante 1 dargestellt. Gleiche Teile sind mit gleichen Bezugszahlen gekennzeichnet. Gut erkennbar sind hier die beiden Einlagen 6 und 6' aus Gewebe zur Erhöhung der weiteren Reißfestigkeit, die auf beiden Seiten zwischen dem inneren Bereich 5 mit größerer Härte und dem daran angrenzenden Bereich 4 mit geringerer Härte ausgebildet sind. Der Bereich 4 ist dabei bevorzugt durchgängig ausgebildet und bildet die gesamte übrige Gurtkante aus. Denkbar ist es, im Außenbereich der Gurtkante weitere zusätzliche Schichten oder Bereiche andere Härte vorzusehen, so wie dies aus dem Stand der Technik bekannt ist.

In Fig. 4 ist eine zweite Ausführungsform eines erfindungsgemäßen Förderbandes dargestellt, wobei hier die Gurtkante 1 derart ausgebildet ist, daß die Arme 2' im Außenbereich des Förderbandes 10 sind, während die Wulst 3' am förderbandseitigen Ende der Gurtkante 1 angeordnet ist. In die von der Gurtkante 1 gebildete Ausnehmung ist das Förderband 10 eingelegt und insbesondere im Bereich der Arme 2' mit diesem vernäht und/oder verklebt. Die Gurtkante 1 weist auch hier einen inneren Bereich 5 aus einem härteren Material, insbesondere aus einem härter eingestellten Polyurethan und einen äußeren Bereich 5 aus einem weicheren Material, insbesondere einem weicher eingestellten Polyurethan auf. Die Gurtkante oder die Bereiche der Gurtkante können auch als Harzformteile beschrieben werden.

In Fig. 5 ist die Gurtkante gemäß Fig. 4 in einer perspektivischen Ansicht dargestellt, wobei der innere Bereich 5 herausgezogen dargestellt ist.

In Fig. 6 ist ein Förderband 10 mit Gurtkanten 1 an jeder Längsseite des Förderbandes 10 dargestellt. Auch bei den vorhergehenden Ausführungsformen können die Gurtkanten 1 jeweils an einer oder an beiden Seiten, bevorzugt an beiden Seiten, angeordnet sein. Im übrigen entspricht die Ausführungsform der Gurtkante 1 in Fig. 6 der Ausführungsform gemäß Fig. 3, wobei in der Ausführungsform gemäß Fig. 6 eine Einlage 6 vorgesehen ist.

In Fig. 7 ist eine entsprechende dreidimensionale Darstellung der Gurtkante 1 aus Fig. 6 dargestellt. Auch in dieser ist der innere Bereich größerer Härte und der äußere Bereich geringerer Härte zu erkennen.

## Patentansprüche

1. Förderband mit mindestens einer an einer Kante des Förderbandes (10) angeordneten Gurtkante (1), wobei die Gurtkante (1) Bereiche verschiedener Härten aufweist,
**dadurch gekennzeichnet,**
**daß** ein unmittelbar am Förderband (10) anliegender, parallel zum Förderband ausgerichteter Bereich (4) eine größere Härte aufweist als ein sich an diesen Bereich (4) nach außen anschließender Bereich (5).

2. Förderband nach Anspruch 1, **dadurch gekennzeichnet, daß** der Bereich größerer Härte (4) das Förderband (10) innerhalb der Gurtkante (1) umschließt.

3. Förderband nach einem der vorhergehenden Ansprüche, **dadurch gekennzeichnet, daß** die Gurtkante (1) aus zwei verschiedenen Teilen (4, 5) zusammengesetzt ist.

4. Förderband nach einem der Ansprüche 1 oder 2, **dadurch gekennzeichnet, daß** die Gurtkante (1) mit dem Bereich geringerer Härte (5) und dem Bereich größerer Härte (4) durch Koextrudieren hergestellt ist.

5. Förderband nach einem der vorhergehenden Ansprüche, **dadurch gekennzeichnet, daß** in der Gurtkante (1) Fäden eines reißfesten Materials angeordnet sind.

6. Förderband nach Anspruch 5, **dadurch gekennzeichnet, daß** die Fäden ein Gewebe (6') ausbilden.

7. Förderband nach einem der Ansprüche 5 oder 6, **dadurch gekennzeichnet, daß** die Fäden als Einlage in der Gurtkante (1) angeordnet sind.

8. Förderband nach einem der Ansprüche 6 oder 7, **dadurch gekennzeichnet, daß** die Fäden des reißfesten Materials in einer sich parallel zum Förderband (10) erstreckenden Ebene angeordnet sind.

9. Förderband nach einem der Ansprüche 5 bis 8, **dadurch gekennzeichnet, daß** die Gurtkante (1) eine Wulst (3, 3') und das Förderband (10) umschließende Arme (2, 2') aufweist.

10. Gurtkante zur Verbindung mit einem Förderband,
**dadurch gekennzeichnet,**
**daß** ein innerer Bereich der Gurtkante eine größere Härte aufweist als ein sich an diesen Bereich nach außen anschließender Bereich.

## Claims

1. A conveyor belt having at least one rim of the belt (1) arranged on one edge of the conveyor belt (10), whereby the rim of the belt (1) has areas of differing hardness, **characterised in that** an area (4) directly abutting the conveyor belt (10) and aligned in parallel to the conveyor belt is of greater hardness than an area (5) abutting this area (4) from the outside.

2. The conveyor belt according to claim 1, **characterised in that** the area of greater hardness (4) encloses the conveyor belt (10) within the rim of the belt (1).

3. The conveyor belt according to any one of the preceding claims, **characterised in that** the rim of the belt (1) is composed of two different parts.

4. The conveyor belt according to any one of claims 1 or 2, **characterised in that** the rim of the belt (1) having the area of lesser hardness (5) and the area of greater hardness (4) is manufactured by co-extrusion.

5. The conveyor belt according to any one of the preceding claims, **characterised in that** threads of a tear-resistant material are arranged within the rim of the belt (1).

6. The conveyor belt according to claim 5, **characterised in that** the threads form a woven fabric.

7. The conveyor belt according to any one of claims 5 or 6, **characterised in that** the threads are arranged as wadding in the rim of the belt (1).

8. The conveyor belt according to any one of claims 6 or 7, **characterised in that** the threads of the tear-resistant material are arranged in a plane running parallel to the conveyor belt.

9. The conveyor belt according to any one of claims 1 to 8, **characterised in that** the rim of the belt (1) has a bead (3, 3') and arms (2, 2') enclosing the conveyor belt (10).

10. A rim of a belt for connection to a conveyor belt, **characterised in that** an inner area of the belt rim is of greater hardness than an area abutting this area from the outside.

## Revendications

1. Bande transporteuse comportant au moins une arête de courroie (1) disposée sur une arête de la bande transporteuse (10), moyennant quoi l'arête de courroie (1) présente des portions de duretés différentes,
**caractérisée en ce que**
une portion (4) reposant directement sur la bande transporteuse (10), orientée parallèlement à la bande transporteuse présente une dureté plus grande qu'une portion (5) se raccordant à cette portion (4) vers l'extérieur.

2. Bande transporteuse selon la revendication 1, **caractérisée en ce que** la portion de plus grande dureté (4) enserre la bande transporteuse (10) à l'intérieur de l'arête de courroie (1).

3. Bande transporteuse selon une des revendications précédentes, **caractérisée en ce que** l'arête de courroie (1) est composée de deux parties (4,5) différentes.

4. Bande transporteuse selon une des revendications 1 ou 2, **caractérisée en ce que** l'arête de courroie (1) comportant la portion de dureté moindre (5) et la portion de plus grande dureté (4) est fabriquée par coextrusion.

5. Bande transporteuse selon une des revendications précédentes, **caractérisée en ce que** des fils d'un matériau indéchirable sont disposés dans l'arête de courroie (1).

6. Bande transporteuse selon la revendication 5,
**caractérisée en ce que** les fils forment une toile tissée (6').

7. Bande transporteuse selon une des revendications 5 ou 6, **caractérisée en ce que** les fils sont disposés comme une garniture intérieure dans l'arête de courroie (1).

8. Bande transporteuse selon une des revendications 6 ou 7, **caractérisée en ce que** les fils du matériau indéchirable sont disposés sur un plan s'étendant parallèlement à la bande transporteuse (10).

9. Bande transporteuse selon une des revendications 5 à 8, **caractérisée en ce que** l'arête de courroie (1) présente un bourrelet (3,3') et des bras (2,2') enserrant la bande transporteuse (10).

10. Arête de courroie à relier avec une bande transporteuse,
**caractérisée en ce que**
une portion intérieure de l'arête de courroie présente une dureté plus grande qu'une portion se raccordant à cette portion vers l'extérieur.
